# EUROPEAN PATENT SPECIFICATION

(11) **EP 2 975 509 B1**
(45) Date of publication and mention of the grant of the patent: **22.09.2021**
(21) Application number: 13878180.2
(22) Date of filing: 30.12.2013
(51) Int. Cl.: G06F 9/445, G06F 9/4401, G06F 9/451, G06F 3/0481

(54) **DESKTOP DISPLAY METHOD AND DEVICE**
VERFAHREN UND VORRICHTUNG FÜR DESKTOPANZEIGE
PROCÉDÉ ET DISPOSITIF D'AFFICHAGE DE BUREAU

(30) Priority: 11.03.2013 CN 201310076032
(43) Date of publication of application: 20.01.2016
(73) Proprietor: Xiaomi Inc., Beijing 100085 (CN)
(72) Inventor: ZHANG, Guoquan, Beijing 100085 (CN); LIU, Anyu, Beijing 100085 (CN); WANG, Qiang, Beijing 100085 (CN)
(74) Representative: Cabinet Beau de Loménie
(86) International application number: PCT/CN2013/090959
(87) International publication number: WO 2014/139312

(56) References cited:
- CN-A- 102 707 915
- CN-A- 102 955 648
- CN-A- 103 186 319
- US-A1- 2005 280 633
- US-A1- 2007 061 495
- US-A1- 2009 313 580

## Description

### TECHNICAL FIELD

The present disclosure generally relates to computer technology, and more particularly, to a method of displaying a desktop and a device thereof.

### BACKGROUND

A terminal may be connected to various different peripheral devices, for example, an earphone, a loudspeaker box, an on-board device and a USB device, etc. Users connect a peripheral device to a terminal so as to use applications in the terminal. For example, users connect an earphone to the terminal to listen to songs or view movies and so on; and users connect a USB device to the terminal for the purpose of data transmission, etc.

Generally, after a peripheral device is connected the terminal, it is possible to display icons and other identifications in a display interface so as to inform users that the peripheral device is successfully connected. Afterwards, users may find an application associated with the peripheral device in the terminal so as to use the application.

However, there are a number of applications installed in the terminal. After the peripheral device is connected to the terminal, it is quite difficult for users to find the application associated with the peripheral device from numerous applications, which is quite time-consuming.

Document US 2007/0061495 discloses a method to detect the arrival of a newly attached device, the method comprising a step of scanning the device in order to determine the type, and a step of presenting a list of programs registered to handle the device.

Document US 2009/313580 discloses a method for highlighting icons of applications that are usable when a device connects to a wireless access point.

Document US 2005/280633 discloses method for changing the desktop theme of a computer when a mouse is connected to the computer.

### SUMMARY

The invention is defined by the independent claims. The dependent claims define preferred embodiments.

The embodiments of the present disclosure provide a method and apparatus of displaying a desktop, which may facilitate users in finding applications associated with a peripheral device after the peripheral device are connected to a terminal, thereby simplifying user's operation and saving time for users.

It will be appreciated that both the foregoing general description and the following detailed description are exemplary and explanatory only and are not restrictive of the disclosure.

### BRIEF DESCRIPTION OF THE DRAWINGS

Fig.1 is an exemplary flowchart of a method of displaying a desktop according to a first embodiment of the present disclosure.
Fig.2 is an exemplary flowchart of a method of displaying a desktop according to a second embodiment of the present disclosure.
Fig.3 is an exemplary flowchart of a method of displaying a desktop according to a third embodiment of the present disclosure.
Fig.4 is an exemplary structure diagram of an apparatus of displaying a desktop according to a fourth embodiment of the present disclosure.
Fig.5 is a first structure diagram of an apparatus of displaying a desktop according to the fourth embodiment of the present disclosure.
Fig.6 is a structure diagram of a finding sub-module in the first structure according to the fourth embodiment of the present disclosure.
Fig.7 is a second structure diagram of an apparatus of displaying a desktop according to the fourth embodiment of the present disclosure.

Specific embodiments of the present disclosure are shown by the above drawings, and more detailed description will be made hereinafter. These drawings and text description are not for limiting the scope of conceiving the present disclosure in any way, but for illustrating the concept of the present disclosure for those skilled in the art by referring to specific embodiments. The second embodiment is not according to the invention and is present for illustration purposes only.

### DETAILED DESCRIPTION

Detailed description of the present disclosure will further be made with reference to drawings and embodiments in order to make the objects, features and advantages of the present disclosure more apparent and lucid.

The embodiments of the present disclosure provide a method of displaying a desktop, which may highlight an application associated with the peripheral device on the desktop when the terminal is connected to the peripheral device, which is convenient for users to find applications and simple in operation, thus saving time.

In the embodiments of the present disclosure, the terminal is an intelligent electronic device which can operate according to programs and automatically process mass data at high speed, such as, a desktop computer, a laptop, a mobile phone or a tablet computer and the like.

The peripheral device refers to a hardware device connected to the terminal, which may transmit, transfer and store data and information, serve as an important component of a computer system, and be referred to as a peripheral.

There are a variety of peripheral devices, roughly divided into an input device, an output device and an external memory. The input device includes a keyboard, a mouse, a scanner, a web camera and the like; the output device includes a display, a printer, a loudspeaker box, an earphone and the like; and the external memory includes an optical disk, a mobile hard disk, USB flash disk and the like.

An application refers to application software, being various programming languages available for users and a set of applications programmed by various programming languages, comprising application software packages and user programs.

A first embodiment:

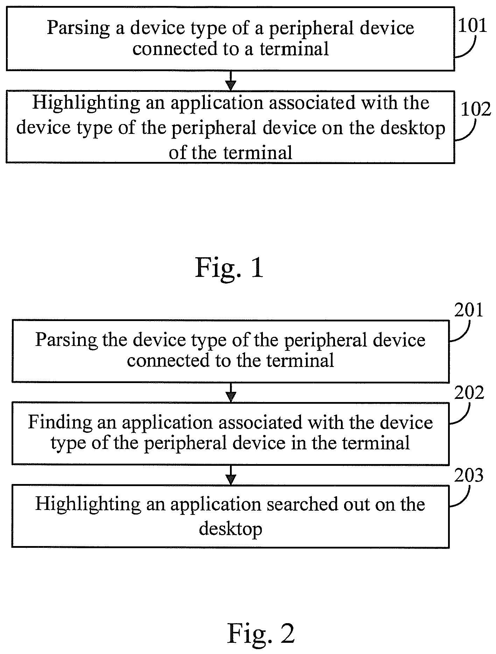

Fig.1 provides an exemplary flowchart of a method of displaying a desktop according to a first embodiment of the present disclosure.

In Step 101, a device type of the peripheral device connected to the terminal is parsed.

Different peripheral devices have different uses. After the terminal is connected to a peripheral device, users may use different applications. Therefore, the device type of the peripheral device connected to the terminal may be parsed so as to determine what kind of peripheral device is connected.

In the embodiments of the present disclosure, peripheral devices may be classified on the basis of device types, for example, audio-visual devices, memory devices and the like. Herein, device types may be divided on the basis of functions or uses and the like, to which the embodiments of the present disclosure make no restriction. Therefore, when a peripheral device is parsed, it is possible to parse the device type of the peripheral device. For example, an earphone, a loudspeaker box and the like may be parsed as audio-visual devices, and a USB flash disk, a mobile hard disk and the like may be parsed as memory devices.

In Step 102, an application associated with the device type of the peripheral device on a desktop of the terminal is highlighted.

Generally, after connecting different peripheral devices to the terminal, users may use different applications. For example, after an earphone is connected, users may use an audio player or a video player to play audio files or video files. After a printer is connected, users may use office software or picture processing software to print files and pictures, etc. A number of applications may be installed in the terminal. Therefore, it is quite difficult and cumbersome for users to find their desired applications from applications in the terminal.

Based on the above problems, after the device type of a peripheral device is parsed, the embodiments of the present disclosure may determine, according to the device type, to highlight what kind of applications on the desktop of the terminal. The application is an application in association with the device type of the peripheral device. Herein, the association refers to an association relationship between the device type of the peripheral device and the application. And the association relationship may be reflected by means of a mapping relationship or establishing an association list and so on, i.e., one item in the list may be searched out according to another item therein. For example, a corresponding application may be searched out by means of the device type of a peripheral device. For example, after an earphone is connected to the terminal, it is possible to parse the device type of the peripheral device (earphone) as an audio-visual device, and an application associated with the peripheral device may be an audio player or a video player, etc. After a printer is connected to the terminal, it is possible to parse the device type of the peripheral device (printer) as a memory device, and an application associated with the peripheral device may be office software or picture processing software, etc.

In the he embodiments of the present disclosure, it is possible to directly find an application associated with the device type of the peripheral device and further highlight the application on the desktop. The manner of highlighting the application on the desktop is achieved by highlighting the application identification of the application, or by configuring a terminal theme associated with the device type of the peripheral device and highlighting the application associated with the device type of the peripheral device in the terminal theme. That is, the application identification of the application associated with the device type of the peripheral device is highlighted, and after the terminal is switched into the terminal theme, effects of highlighted display may be viewed.

Herein, the application identification refers to an identification configured to trigger the startup of an application, for example, an application icon and other shortcut. An application may be triggered to start up by means of the application identification so that users may conveniently use the application.

The terminal theme refers to a display style of the terminal, including: display layout of items in the terminal, and display color style of the terminal, etc. For example, the terminal has a desktop and an application interface. It is possible to determine, by means of the terminal theme, how to display the desktop and the application interface, and to determine which color and background picture shall be applied to the desktop and the application interface, etc.

Herein, as a desktop of the operating system of the terminal, the desktop is a display interface of the terminal by default. The application interface refers to an interface of an application such as an address list and so on.

For example, a particular area on the desktop may be configured to display the application identification. For example, an application area for peripherals may be partitioned off from the upside of the desktop, and all applications associated with the device type of the peripheral device are displayed in the area.

For another example, when a terminal theme including a display layout of the terminal and associated with the device type of a peripheral device is switched, a corresponding application identification may be displayed on the desktop according to the terminal theme. For example, the background color of the desktop is black, and wherein the background color of a part of application identifications may be white, i.e., a part of application identifications are different from the desktop in background color. This part of application identifications belong to applications associated with the device type of the peripheral device.

Thus, with the above method, users may conveniently search out an application associated with the device type of a peripheral device on the desktop of the terminal, unnecessary to find the application associated with the peripheral device from numerous applications in the application interface of the terminal. Applications are displayed very intuitively, which is convenient for users to find and use applications, thus saving time for finding applications.

### A second embodiment

Referring to Fig.2, it provides an exemplary flowchart of a method of displaying a desktop according to a second embodiment of the present disclosure. The embodiment mainly describes a method for directly finding and displaying applications on the basis of the device type of a peripheral device, including following steps.

In Step 201, a device type of the peripheral device connected to the terminal is parsed.

In Step 202, an application associated with the device type of the peripheral device is found in the terminal.

After the device type is determined, it is possible to find an application associated with the peripheral device according to the device type, and further to determine the application identification of the application so that users may subsequently trigger and use the application according to the application identification.

As an alternative embodiment, the finding applications associated with the device type of the peripheral device in the terminal includes: finding an application associated with the device type of the peripheral device according to a preset association relationship between device types and applications.

In the embodiments of the present disclosure, in order to quickly search out applications after a peripheral device is connected to the terminal, an association relationship between device types and applications may be preset, for example, audio-visual devices are associated with audio and video players. In this manner, after the device type of the peripheral device connected to the terminal is parsed, it is possible to quickly find applications associated the device type of the peripheral device by means of the association relationship.

Thus, it is clear that in this alternative embodiment, an association relationship between the device type of the peripheral device and applications is preset so that after the peripheral device is connected to the terminal it is possible to quickly find applications associated the device type of the peripheral device and it is more quickly and conveniently to find subsequent applications.

As another alternative embodiment, the finding applications associated with the device type of the peripheral device in the terminal includes: traversing application types of respective applications in the terminal, and determining an application corresponding to an application type matched with the device type of the peripheral device as the application associated with the device type of the peripheral device.

The above configuration method of an application type includes: determining a matched application type according to the device type of the peripheral device, and configuring an application type for each application in the terminal.

Applications to be installed in the terminal are various in terms of specific functions. On the basis of different functions, device types of peripheral devices associated with respective applications are diverse. For example, some applications may configure sound for pictures and texts and so on, and thus these applications may be associated with an earphone, a microphone and other audio-visual device. For another example, some applications may be camera applications with picture beautification functions, and thus these applications may be associated with memory devices such as a printer or an external memory, etc.

Therefore, in the embodiments of the present disclosure, in order to reduce time for manually finding an application by users after a peripheral device is connected; an application associated with the device type of the peripheral device may be preset. In order to determine the application associated with the peripheral device, first of all, the application type may be configured according to the device type of the peripheral device. For example, the application type may be an audio-visual application if the device type is an audio-visual device. For another example, the application type may be a data-transmission application if the device type is a data transmission device. It is also possible to associate the application type with the device type of the peripheral device so that corresponding application type may be searched out by means of the device type.

Afterwards, it is determined which of peripheral devices may be connected to the terminal and then it is determined which of applications have been installed into the terminal. Respective applications are associated with respective peripheral devices, for example, a mapping relationship between applications and peripheral devices is established, or an association list between applications and peripheral devices is maintained. In this way, an associated application may be searched out by means of a peripheral device. After an application associated with a peripheral device is determined, it is also possible to determine display contents of the application so as to subsequently display the contents. For example, an application identification of the application may be determined and saved together with the application in the association list.

Herein, when application types of applications are configured, applications in the terminal may be classified on the basis of application types. When applications are classified, the terminal may be configured to make an automatic classification. For example, applications with audio and video playing or acquisition functions may be classified as audio-visual applications. For another example, applications with text and picture editing functions may be classified as the data transmission applications.

However, each application may have diverse functions, and different users may use the same application for different treatments. Therefore, in the embodiments of the present disclosure, users may classify applications so as to meet their different demands. There are three methods used by users for classifying applications. The first method is to immediately inform users of classifying new applications once these new applications are installed successfully. The second method is to inform users of classifying applications after these applications are installed, for example, a menu including classification selection is popped up by long pressing an application icon, and. The third method is to provide a special classification selection interface so that users may select classifications corresponding to each classification.

Afterwards, the display content of the classified applications are determined. Each application is corresponding to an exclusive display identification if the display contents are application identifications.

For example, device types may be associated with application types by using the form of an association list which preferably is configured with applications underneath application types and display contents of applications. Herein, one form of the association list is as shown in Table 1:

**Table 1**

| Device type | Audio-visual | | Data transmission | | ...... | |
|---|---|---|---|---|---|---|
| Application type | Audio-visual | | Data transmission | | ...... | |
| Applications | Application | Display content | Application | Display content | Application | Display content |
| | Player | Icon | Office software | Icon | ...... | ...... |
| | Sound recorder | Icon | Picture beautification | Icon | ...... | ...... |

Herein, Table 1 is merely one form of the application list between device types and application types, which shall be not understood as limitation to the embodiments of the present disclosure.

Thus, for finding an application type associated with the device type of a peripheral device, it is possible to find the application type either on the basis of the mapping relation or from the association list. By means of an application type, it is possible to search out not only applications of the application type but also display contents of the applications so as to find an application identification corresponding to an application from display contents.

If device types, application types, applications and display contents are configured into the same association list, it is possible to successively search out application types, applications and application identifications from the association list through a device type, thus determining application identifications displayed in the terminal under the device type.

It is thus clear that in this alternative embodiment, application types are preset, and applications as well as application identifications corresponding to the application types are configured. Therefore, when a terminal is connected to a peripheral device, it is possible to quickly search out application types associated with the peripheral device according to preset application types, and further to search out corresponding applications and application identifications thereof and highlight them on the desktop, thus shortening time for finding applications, improving efficiency in finding applications, and facilitating users in using applications.

In Step 203, an application searched out is highlighted on the desktop.

After an application associated with the device type of a peripheral device is determined, it is possible to highlight the application on the desktop of the terminal. For example, an application identification of the application is displayed so that users may conveniently search out their desired application on the desktop and trigger the application identification to use the application.

In the embodiments of the present disclosure, in order to facilitate users in finding applications, when the application is highlighted, it is possible to change display position or background color and so on of the application in the terminal so as to reduce lookup time for users.

In an alternative embodiment, the highlighting an application associated with the device type of a peripheral device includes at least one of following sub-steps:
1) An application associated with the device type of a peripheral device is displayed on a set area of the desktop.

In the embodiments of the present disclosure, when an application associated with the device type of a peripheral device is displayed on the desktop, the application may be displayed on a set area of the desktop. For example, the application may be displayed on a main interface of the desktop, which is the main display interface of the desktop of the terminal, and may be configured as a set area on the desktop. For example, a display area is set to occupy more than 50% of the desktop. And the set area may be configured at the upper part or lower part (or other positions) of the terminal. For another example, if the desktop of the terminal is configured with a plurality of display pages, an additional display page has been added on the desktop, the additional display page will be preferably displayed after the terminal is connected with the peripheral device, and the application associated with the device type of the peripheral device will be highlighted on the additional display page so as to facilitate users in using these applications.

Users may quickly search out the application from the set area and trigger the application to start up. Furthermore, if there are more applications, the set area may be configured to display multiple pages, i.e., it is possible to display applications on multiple pages if it is unable to highlight all these applications in the set area so as to facilitate users in finding applications.
2) An highlighted identification is configured for the application associated with the device type of the peripheral device, and the application associated with the device type of the peripheral device is displayed on the desktop together with the corresponding highlighted identification.

In the embodiments of the present disclosure, each device type may be configured with an exclusive highlighted identification. For example, an earphone may be configured with a picture like an earphone serving as a highlighted identification. For another example, a USB flash disk may be configured with a character "T" as a highlighted identification configured to identify data transmission available.

Therefore, it is configured highlighted identifications for applications associated with the device type of the peripheral device, for example, a highlighted identification is configured on an application icon, and then it is jointly displayed on the desktop applications associated with the device type of the peripheral device and the corresponding highlighted identifications. Thus, after the terminal is connected to the peripheral device, users may quickly search out applications by means of highlighted identifications of the peripheral device and trigger to use these applications.
3) It is configured a preset display color for applications associated with the device type of the peripheral device and it is displayed on the desktop applications associated with the device type of the peripheral device according to the preset display color.

In the embodiments of the present disclosure, an application associated with the device type of a peripheral device may be configured with a preset display color including the background color of an application identification and font color of a literal title corresponding to the application identification, etc. For example, the main color of the desktop is blue, the background color of an application identification may be configured as yellow. In another example, when an application identification is an icon, generally the icon may be configured with a corresponding literal title for more accurate introduction to an application. The literal title of the application on the desktop may be configured as white, while the literal title of the application associated with the peripheral device may be configured as red. Afterwards, an application associated with the device type of the peripheral device may be displayed on the desktop according to the preset display color so that after the terminal is connected to the peripheral device, users may quickly search out the application by means of the display color and trigger the use of the application.

A plurality of methods for highlighting an application associated with the device type of a peripheral device on the desktop are provided in the embodiments of the present disclosure as above, these methods may either be used exclusively or be used jointly. For example, methods 1) and 2) are jointly used so as to more flexibly display application identifications. In addition, the above methods are merely exemplary methods of embodiments. In practical implementation, other methods for highlighting an application identification are also possible, which are not enumerated one by one herein. It shall be not understood as restriction on the embodiments of the present disclosure.

### A third embodiment

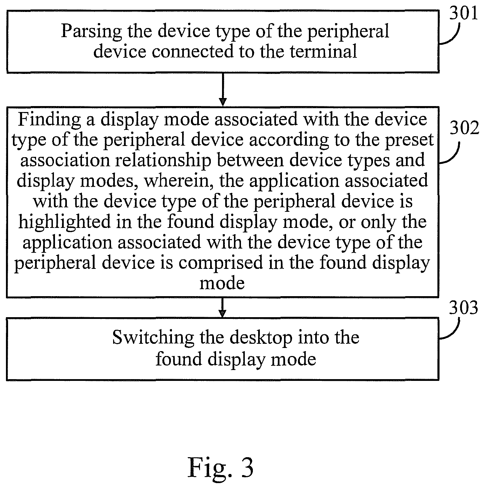

Referring to Fig.3, it provides an exemplary flowchart of a method of displaying a desktop according to a third embodiment of the present disclosure. The embodiment mainly describes a method for finding a display mode on the basis of the device type of a peripheral device and for switching the desktop to the found display mode, including following steps.

In Step 301, the device type of the peripheral device connected to the terminal is parsed.

In Step 302, it is found a display mode associated with the device type of the peripheral device according to the preset association relationship between the device type and the display mode, wherein, in the found display mode, an application associated with the device type of the peripheral device is highlighted, or an application associated with the device type of the peripheral device is only included.

In the embodiments of the present disclosure, an association relationship between a device type and a display mode is preset so that after the device type of a peripheral device is determined, it is possible to find the display mode associated with the device type of the peripheral device. Wherein, the found display mode highlights applications associated with the peripheral device, or the found display mode only includes applications associated with the device type of the peripheral equipment.

In the embodiments of the present disclosure, the display mode may be either a terminal theme or a desktop layer. Whereon the desktop layer may be interpreted as different display layers under the same terminal theme.

Hereinafter reference will be made by taking an example in which the display mode is a terminal theme and in the terminal theme applications associated with the device type of the peripheral device are highlighted.

In the embodiments of the present disclosure, when a terminal theme associated with the device type of a peripheral device is found, the terminal theme may be configured according to the device type of the peripheral device. For example, if an audio-visual device is configured with a terminal theme 1, applications associated with the audio-visual device are highlighted in the terminal theme 1, i.e., application identifications corresponding to applications associated with the audio-visual device are highlighted in the terminal theme 1. At the moment classification results may exist in the form of an association list, to which the embodiments of the present disclosure make not restriction. Herein, one form of the association list is as shown in Table 2:

**Table 2**

| Device type | Audio-visual | | Data transmission | | ...... | |
|---|---|---|---|---|---|---|
| Terminal subject | 1 | | 2 | | ...... | |
| Highlighted application | Application | Display content | Application | Display content | Application | Display content |
| | Player | Icon, position and color | Office software | Icon, position and color | ...... | ...... |
| | Sound recorder | Icon, position and color | Picture beautification | Icon, position and color | ...... | ...... |

Herein, Table 2 merely provides an example, which shall be not understood as restriction on the embodiments of the present disclosure.

The highlighting an application associated with the device type of a peripheral device may include at least one of following sub-steps: displaying applications associated with the device type of the peripheral device on a set area of the desktop; configuring highlighted identifications for applications associated with the device type of the peripheral device, and jointly displaying on the desktop applications associated with the device type of the peripheral device and the corresponding highlighted identifications; configuring a preset display color for applications associated with the device type of the peripheral device and displaying on the desktop applications associated with the device type of the peripheral device according to the preset display color.

Above methods are basically consistent with what is described in A second embodiment, not to be repeated any more herein.

Display contents in Table 2 include an application identification and a display mode, etc. For example, an icon serves as an application identification, and in the display contents the icon on the desktop is configured with a display position and background color and the like.

After the device type of the peripheral device connected to the terminal is determined, it is possible to find a corresponding terminal theme by means of the device type. For example, if the device type is an audio-visual device, it is possible to search out the terminal theme 1 by means of the association list, etc.

Table 2 merely provides an example, a display mode may also be a desktop layer, and the display mode may only include applications associated with the device type of the peripheral device.

In Step 303, the desktop is switched into the found display mode.

In the present embodiment, if a peripheral device is disconnected from the terminal, it is also possible to automatically switch back to the display mode before the peripheral device is connected to the terminal.

In a mode of execution of the present embodiment, display methods of applications are configured in the display mode, i.e., applications associated with the device type of the peripheral device are highlighted in the display mode. Therefore, the desktop is switched to the display mode, and applications are highlighted on the desktop according to display methods configured in the display mode so as to facilitate users in finding and using applications.

In another mode of execution of the present embodiment, the display mode switched only includes applications associated with the device type of a peripheral device. Users may conveniently search out applications associated with the device type of the peripheral device, thus saving time for finding applications.

In conclusion, in the embodiments of the present disclosure, display modes corresponding to device types are preset so that when a peripheral device is connected to the terminal, it is possible to quickly search out a corresponding display mode by means of the device type of the peripheral device. After it is switched to the display mode searched out, the display mode highlights applications associated with the device type of the peripheral device, or the display mode only includes applications associated with the device type of the peripheral device so that it is possible to more flexibly display applications in the terminal, to shorten time for finding applications, to improve efficiency in finding applications and facilitating users in using applications.

### A fourth embodiment

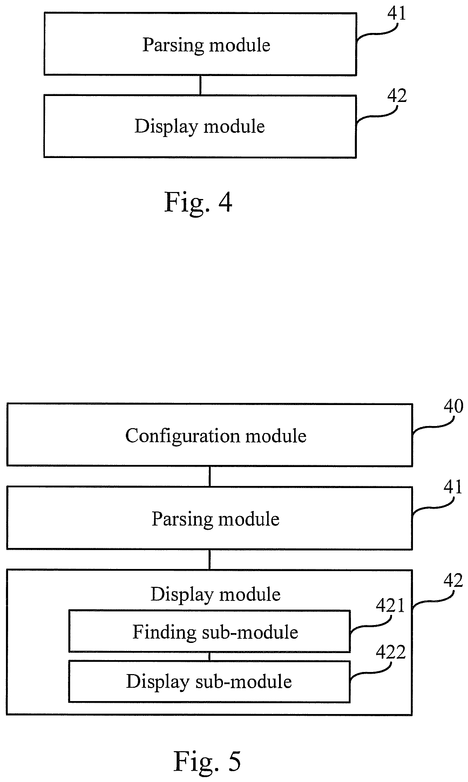

Referring to Fig.4, which provides an exemplary structure diagram of an apparatus of displaying a desktop according to a fourth embodiment of the present disclosure.

Accordingly, the embodiments of the present disclosure also provide an apparatus of displaying a desktop, including:
an parsing module 41, configured to parse the device type of the peripheral device connected to the terminal; and
a display module 42, configured to highlight applications associated with the device type of the peripheral device on the desktop of the terminal.

Referring to Fig.5, it is a first structure diagram of an apparatus of displaying a desktop according to a fourth embodiment of the present disclosure.

As an alternative embodiment, the display module 42 includes:
a finding sub-module 421, configured to find applications associated with the device type of the peripheral device in the terminal; and
a display sub-module 422, configured to highlight an application searched out on the desktop.

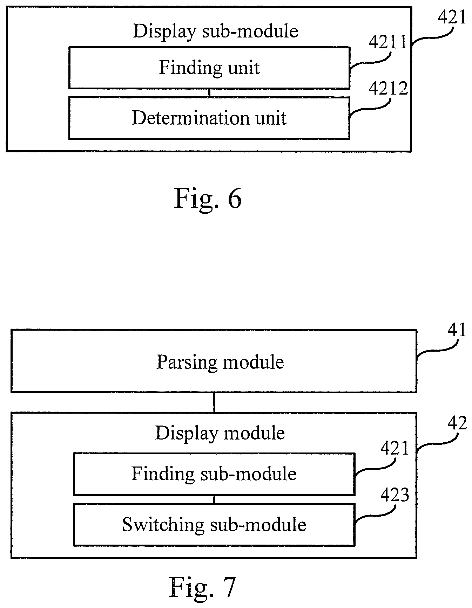

Referring to Fig.6, which provides a structure diagram of a finding sub-module in the first structure according to a fourth embodiment of the present disclosure.

As an alternative embodiment, the finding sub-module 421 includes:
a finding unit 4211, configured to traverse an application type of each application in the terminal; and
a determination unit 4212, configured to determine an application corresponding to an application type matched with the device type of the peripheral device as the application associated with the device type of the peripheral device.

In an example, the device as shown in Fig.5 also includes a configuration module 40, configured to determine a matched application type according to the device type of the peripheral device, and to configure the application types for the respective applications in the terminal.

As another alternative embodiment, the finding sub-module 421 is configured to find applications associated with the device type of the peripheral device according to a preset association relationship between the device type and applications.

In an example, the highlighting an application associated with the device type of the peripheral device may include at least one of following sub-steps: displaying applications associated with the device type of the peripheral device on a set area of the desktop; configuring highlighted identifications for applications associated with the device type of the peripheral device, and jointly displaying on the desktop applications associated with the device type of the peripheral device and the corresponding highlighted identifications; configuring a preset display color for applications associated with the device type of the peripheral device and displaying on the desktop applications associated with the device type of the peripheral device according to the preset display color.

Referring to Fig.7, which provides a second structure diagram of an apparatus of displaying a desktop according to a fourth embodiment of the present disclosure.

As an alternative embodiment, the display module 42 includes:
A finding sub-module 421, configured to find a display mode associated with the device type of the peripheral device according to the preset association relationship between the device type and the display mode. The found display mode highlights applications associated with the device type of the peripheral device, or the found display mode only includes applications associated with the device type of the peripheral device.

A switching sub-module 423, configured to switch the desktop to the found display mode.

The switching sub-module 423 is also configured to switch the desktop to the display mode before the peripheral device is connected to the terminal when the peripheral device is disconnected from the terminal.

As an alternative embodiment, the highlighting an application associated with the device type of the peripheral device may include at least one of following sub-steps: displaying applications associated with the device type of the peripheral device on a set area of the desktop; configuring highlighted identifications for applications associated with the device type of the peripheral device, and jointly displaying on the desktop applications associated with the device type of the peripheral device and the corresponding highlighted identifications; configuring a preset display color for applications associated with the device type of the peripheral device and displaying on the desktop applications associated with the device type of the peripheral device according to the preset display color.

In conclusion, the embodiments of the present disclosure may parse the device type of the peripheral device connected to the terminal, and highlight applications associated with the device type of the peripheral device on the desktop. Therefore, users may conveniently search out applications associated with the device type of the peripheral device on the desktop of the terminal, unnecessary to find applications associated with the peripheral device from numerous applications in the application interface of the terminal. Applications are displayed very intuitively, which is convenient for users to find and use applications, thus saving time for finding applications.

Further, in the embodiments of the present disclosure, application types are preset, and applications and application identifications corresponding to these application types are configured. Thereby, when a terminal is connected to peripheral devices, it is possible to quickly search out application types associated with these peripheral devices according to preset application types, and further to search out corresponding applications and application identifications thereof and highlight them on the desktop, thus shortening time for finding applications, improving efficiency in finding applications, and facilitating users in using applications.

Still further, an association relationship between the device type of the peripheral device and applications is preset so that after the peripheral device is connected to the terminal it is possible to quickly find applications associated the device type of the peripheral device and it is more quickly and conveniently to find subsequent applications.

Still further, in the embodiments of the present disclosure, when applications associated with the device type of the peripheral device are highlighted, these applications may be displayed on a set area of the desktop. Applications may be configured with highlighted identifications. Applications and highlighted identifications may be jointly displayed on the desktop. Applications may be configured with preset display color and displayed according to the preset display color. Methods for displaying applications on the desktop are flexible and diverse so as to facilitate users in finding applications.

Still further, in the embodiments of the present disclosure, a display mode corresponding to device types is preset, in which applications associated with the device type of the peripheral device are highlighted. Or, the found display mode only includes applications associated with the device type of the peripheral device. Thus, when the peripheral device is connected to the terminal, it is possible to quickly search out the display mode by means of the device type of the peripheral device. After it is switched to the display mode searched out, it is possible to shorten time for finding applications, to improve efficiency in finding applications and to facilitate users in using applications.

Device embodiments are basically similar to method embodiments, so description of device embodiments is relatively simple. Please see method embodiments which may serve as reference.

The embodiments in the specification are described in a progressive manner. Each embodiment focused on difference from other embodiments. And cross reference is available for identical or similar parts among different embodiments.

The embodiments of the present disclosure may be described in a general context of computer instructions executed by a computer, for example, a program module. Generally, the program module includes a routine for executing a specific task or realizing a specific abstract data type, an application, an object, a component or a data structure, etc. The embodiments of the present disclosure may be put into practice in a distributed computing environment, in which tasks are executed by remote processing equipment connected through a communication network. In a distributed computing environment, the program module may be arranged in local and remote computer storage media, including a storage device.

Finally it should be explained that a relational term (such as a first or a second......) is merely intended to separate one entity or operation from another entity or operation instead of requiring or hinting any practical relation or sequence exists among these entities or operations. Furthermore, terms such as "comprise", "include" or other variants thereof are intended to cover a non-exclusive "comprise" so that a process, a method, a merchandise or a device comprising a series of elements not only includes these elements, but also includes other elements not listed explicitly, or also includes inherent elements of the process, the method, the merchandise or the device. In the case of no more restrictions, elements restricted by a sentence "include a ......" do not exclude the fact that additional identical elements may exist in a process, a method, a merchandise or a device of these elements.

Detailed description of the method of displaying a desktop and device provided by the embodiments of the present disclosure is made hereinabove, elaboration of the principle and mode of execution of the embodiments of the present disclosure is made by using specific examples herein, and the foregoing embodiments are merely intended to assist in understanding the method and core concept of the present disclosure; also, those of ordinary skill in the art may change, in according with the core concept of the embodiments of the present disclosure, concrete modes of execution and scope of application. In conclusion, the specification shall be not interpreted as restriction on the embodiments of the present disclosure.

## Claims

1. A method of displaying a desktop, the method comprising:
parsing (101, 201, 301) a device type of a peripheral device connected to a terminal; and
highlighting (102) an application associated with the device type of the peripheral device in the desktop of the terminal,
the method being **characterized in that** the step of highlighting an application associated with the device type of the peripheral device on a desktop of the terminal comprises:
finding (302) a display mode associated with the device type of the peripheral device according to a preset association relationship between device types and display modes; and
switching (303) the desktop into the found display mode;
wherein, the application associated with the device type of the peripheral device is highlighted in the found display mode, or only the application associated with the device type of the peripheral device is comprised in the found display mode;
wherein, if the peripheral device is disconnected from the terminal, switching the desktop back into the previous display mode used before the peripheral device was connected to the terminal.

2. The method according to claim 1, **characterized in that**, the highlighting an application associated with the device type of the peripheral device comprises at least one of the following items:
displaying the application associated with the device type of the peripheral device in a set area of the desktop;
configuring a highlighted identification for the application associated with the device type of the peripheral device, and displaying the application associated with the device type of the peripheral device together with the corresponding highlighted identification, on a desktop; and
configuring a preset display color for the application associated with the device type of the peripheral device, and displaying the application associated with the device type of the peripheral device on the desktop according to the preset display color.

3. An apparatus of displaying a desktop, the apparatus comprising:
a parsing module (41), configured to parse a device type of a peripheral device connected to a terminal; and
a display module (42), configured to highlight an application associated with the device type of the peripheral device on a desktop of the terminal,
the apparatus being, **characterized in that**, the display module (42) comprises:
a finding sub-module (421), configured to find a display mode associated with the device type of the peripheral device according to a preset association relationship between device types and display modes; and
a switching sub-module (423), configured to switch the desktop into the found display mode;
wherein, the application associated with the device type of the peripheral device is highlighted in the found display mode, or only the application associated with the device type of the peripheral device is comprised in the found display mode ;
and wherein, the switching sub-module (423) is further configured to switch the desktop back into the previous display mode used before the peripheral device was connected to the terminal, if the peripheral device is disconnected from the terminal.

4. The apparatus of claim 3, wherein the display mode is a terminal theme or a desktop layer.

5. A computer program product stored on a computer usable medium, comprising computer-readable program means for causing an intelligent terminal to implement the method according to any one of claims 1 to 2.

## Patentansprüche

1. Verfahren zum Anzeigen eines Desktops, wobei das Verfahren umfasst:
Parsen (101, 201, 301) einer Vorrichtungsart einer Peripherievorrichtung, die mit einem Endgerät verbunden ist, und
Hervorheben (102) einer Anwendung, die mit der Vorrichtungsart der Peripherievorrichtung verknüpft ist, in dem Desktop des Endgeräts,
wobei das Verfahren **dadurch gekennzeichnet ist, dass** der Schritt des Hervorhebens einer Anwendung, die mit der Vorrichtungsart der Peripherievorrichtung verknüpft ist, auf dem Desktop des Endgeräts umfasst:
Ermitteln (302) eines Anzeigemodus, der mit der Vorrichtungsart der Peripherievorrichtung verknüpft ist, gemäß einer voreingestellten Verknüpfungsbeziehung zwischen Vorrichtungsarten und Anzeigemodi, und
Schalten (303) des Desktops in den ermittelten Anzeigemodus,
wobei die Anwendung, die mit der Vorrichtungsart der Peripherievorrichtung verknüpft ist, in dem ermittelten Anzeigemodus hervorgehoben wird oder nur die Anwendung, die die mit der Vorrichtungsart der Peripherievorrichtung verknüpft ist, in dem ermittelten Anzeigemodus enthalten ist,
wobei, wenn die Peripherievorrichtung von dem Endgerät getrennt wird, der Desktop zurück in den vorherigen Anzeigemodus geschaltet wird, der verwendet wurde, bevor die Peripherievorrichtung mit dem Endgerät verbunden war.

2. Verfahren nach Anspruch 1, **dadurch gekennzeichnet, dass** das Hervorheben einer Anwendung, die mit der Vorrichtungsart der Peripherievorrichtung verknüpft ist, mindestens einen der folgenden Punkte umfasst:
Anzeigen der Anwendung, die mit der Vorrichtungsart der Peripherievorrichtung verknüpft ist, in einem festgelegten Bereich des Desktops,
Ausgestalten einer hervorgehobenen Identifizierung für die Anwendung, die mit der Vorrichtungsart der Peripherievorrichtung verknüpft ist, und Anzeigen der Anwendung, die mit der Vorrichtungsart der Peripherievorrichtung verknüpft ist, zusammen mit der entsprechenden hervorgehobenen Identifizierung auf einem Desktop, und
Ausgestalten einer voreingestellten Anzeigefarbe für die Anwendung, die mit der Vorrichtungsart der Peripherievorrichtung verknüpft ist, und Anzeigen der Anwendung, die mit der Vorrichtungsart der Peripherievorrichtung verknüpft ist, auf dem Desktop gemäß der voreingestellten Anzeigefarbe.

3. Einrichtung zum Anzeigen eines Desktops, wobei die Einrichtung umfasst:
ein Parsingmodul (41), das dazu ausgestaltet ist, eine Vorrichtungsart einer Peripherievorrichtung zu parsen, die mit einem Endgerät verbunden ist, und
ein Anzeigemodul (42), das dazu ausgestaltet ist, eine Anwendung, die mit der Vorrichtungsart der Peripherievorrichtung verknüpft ist, auf einem Desktop des Endgeräts hervorzuheben,
wobei die Einrichtung **dadurch gekennzeichnet ist, dass** das Anzeigemodul (42) umfasst:
ein Ermittlungsteilmodul (421), das dazu ausgestaltet ist, einen Anzeigemodus, der mit der Vorrichtungsart der Peripherievorrichtung verknüpft ist, gemäß einer voreingestellten Verknüpfungsbeziehung zwischen Vorrichtungsarten und Anzeigemodi zu ermitteln, und
ein Schaltteilmodul (423), das dazu ausgestaltet ist, den Desktop in den ermittelten Anzeigemodus zu schalten,
wobei die Anwendung, die mit der Vorrichtungsart der Peripherievorrichtung verknüpft ist, in dem ermittelten Anzeigemodus hervorgehoben wird oder nur die Anwendung, die die mit der Vorrichtungsart der Peripherievorrichtung verknüpft ist, in dem ermittelten Anzeigemodus enthalten ist,
und wobei das Schaltteilmodul (423) ferner dazu ausgestaltet ist, den Desktop zurück in den vorherigen Anzeigemodus zu schalten, der verwendet wurde, bevor die Peripherievorrichtung mit dem Endgerät verbunden war, wenn die Peripherievorrichtung von dem Endgerät getrennt wird.

4. Einrichtung nach Anspruch 3, wobei der Anzeigemodus ein Endgerät-Theme oder eine Desktopschicht ist.

5. Computerprogramm-Produkt, das auf einem computernutzbaren Medium gespeichert ist, das computerlesbare Programmmittel umfasst, die ein intelligentes Endgerät dazu veranlassen, das Verfahren nach einem der Ansprüche 1 oder 2 umzusetzen.

## Revendications

1. Procédé d'affichage d'un bureau, le procédé comprenant :
l'analyse (101, 201, 301) d'un type de dispositif d'un dispositif périphérique connecté à un terminal ; et
la mise en surbrillance (102) d'une application associée au type de dispositif du dispositif périphérique dans le bureau du terminal,
le procédé étant **caractérisé en ce que** l'étape consistant à mettre en surbrillance une application associée au type de dispositif du dispositif périphérique sur un bureau du terminal comprend :
la recherche (302) d'un mode d'affichage associé au type de dispositif du dispositif périphérique selon une relation d'association prédéfinie entre des types de dispositifs et des modes d'affichage ; et
la commutation (303) du bureau vers le mode d'affichage trouvé ;
dans lequel, l'application associée au type de dispositif du dispositif périphérique est mise en surbrillance dans le mode d'affichage trouvé, ou seule l'application associée au type de dispositif du dispositif périphérique est comprise dans le mode d'affichage trouvé ;
dans lequel, si le dispositif périphérique est déconnecté du terminal, le bureau passe de nouveau au mode d'affichage précédent utilisé avant la connexion du dispositif périphérique au terminal.

2. Procédé selon la revendication 1, **caractérisé en ce que** la mise en surbrillance d'une application associée au type de dispositif du dispositif périphérique comprend au moins l'un des éléments suivants :
l'affichage de l'application associée au type de dispositif du dispositif périphérique dans une zone définie du bureau ;
la configuration d'une identification en surbrillance pour l'application associée au type de dispositif du dispositif périphérique, et l'affichage de l'application associée au type de dispositif du dispositif périphérique avec l'identification en surbrillance correspondante, sur un bureau ; et
la configuration d'une couleur d'affichage prédéfinie pour l'application associée au type de dispositif du dispositif périphérique, et l'affichage de l'application associée au type de dispositif du dispositif périphérique sur le bureau selon la couleur d'affichage prédéfinie.

3. Appareil d'affichage d'un bureau, l'appareil comprenant :
un module d'analyse syntaxique (41), configuré pour analyser un type de dispositif d'un dispositif périphérique connecté à un terminal ; et
un module d'affichage (42), configuré pour mettre en surbrillance une application associée au type de dispositif du dispositif périphérique sur un bureau du terminal,
l'appareil étant **caractérisé en ce que** le module d'affichage (42) comprend :
un sous-module de recherche (421), configuré pour trouver un mode d'affichage associé au type de dispositif du dispositif périphérique selon une relation d'association prédéfinie entre des types de dispositifs et des modes d'affichage ; et
un sous-module de commutation (423), configuré pour faire passer le bureau au mode d'affichage trouvé ;
dans lequel, l'application associée au type de dispositif du dispositif périphérique est mise en surbrillance dans le mode d'affichage trouvé, ou seule l'application associée au type de dispositif du dispositif périphérique est comprise dans le mode d'affichage trouvé ;
et dans lequel, le sous-module de commutation (423) est en outre configuré pour faire passer le bureau de nouveau au mode d'affichage précédent utilisé avant la connexion du dispositif périphérique au terminal si le dispositif périphérique est déconnecté du terminal.

4. Appareil selon la revendication 3, dans lequel le mode d'affichage est un thème de terminal ou une couche de bureau.

5. Produit de programme informatique stocké sur un support utilisable par ordinateur, comprenant des moyens de programme lisibles par ordinateur pour amener un terminal intelligent à mettre en œuvre le procédé selon l'une quelconque des revendications 1 et 2.
